# EUROPÄISCHE PATENTSCHRIFT

(11) **EP 3 533 118 B1**
(45) Veröffentlichungstag und Bekanntmachung des Hinweises auf die Patenterteilung: **08.11.2023**
(21) Anmeldenummer: 17749149.5
(22) Anmeldetag: 21.07.2017
(51) Int. Cl.: H02B 1/56, H02B 1/052

(54) **BEHEIZTES ELEKTRISCHES VERTEILERSYSTEM**
HEATED ELECTRICAL DISTRIBUTION SYSTEM
SYSTÈME DE DISTRIBUTION ÉLECTRIQUE CHAUFFÉ

(30) Priorität: 26.10.2016 DE 102016221041
(43) Veröffentlichungstag der Anmeldung: 04.09.2019
(73) Patentinhaber: Eaton Intelligent Power Limited, Dublin 4 (IE)
(72) Erfinder: NAUMANN, Reiner, 68239 Mannheim (DE); OTT, Toni, 69151 Neckargemünd (DE); KNAB, Marco, 69412 Eberbach (DE); MÜHLFELD, Patrick, 69412 Eberbach (DE)
(74) Vertreter: Novagraaf Group
(86) Internationale Anmeldenummer: PCT/EP2017/068481
(87) Internationale Veröffentlichungsnummer: WO 2018/077494

(56) Entgegenhaltungen:
- EP-A1- 1 047 168
- CN-A- 1 777 341
- DE-A1-102014 104 857
- DE-U1- 9 217 778
- - Rittal Ltd: "Ready for winter? Rittal can help | Rittal Ltd", , 25 October 2013 (2013-10-25), XP055784121, Retrieved from the Internet: URL:https://rittallimited.blog/2013/10/25/ ready-for-winter-rittal-can-help/ [retrieved on 2021-03-10]

## Beschreibung

Die vorliegende Erfindung betrifft das Gebiet elektrischer Verteilersysteme.

Elektrische Verteilersysteme sind aus der Praxis bekannt, beispielsweise in Form von Schaltschränken oder Anschlusskästen, die in einem Gehäuse Befestigungsschienen zum Befestigen elektrischer Komponenten aufweisen. Die Befestigungsschienen können beispielsweise Relais, Schalter, Zeitschaltuhren, Sicherungen oder andere elektrische Komponenten aufnehmen. Aus der Praxis bekannte Verteilersysteme können elektrische Sammelschienen umfassen, über die die verschiedenen Stromkreise angeschlossen werden können. Üblicherweise umfasst das Gehäuse eine oder mehrere Türen, mit denen eine Vorderseite des Gehäuses geöffnet werden kann, um Zugang zum Inneren des Verteilersystems zu erhalten, um beispielsweise die elektrischen Komponenten zu installieren und zu verkabeln oder Wartungsarbeiten durchzuführen.

Wird ein elektrisches Verteilersystem in sehr kalten Umgebungen aufgestellt, beispielsweise bei Temperaturen von unter -25 °C, kann es vorkommen, dass sich die Auswahl geeigneter elektrischer Komponenten für tiefe Temperaturen signifikant reduziert.

Daher ist es erstrebenswert, ein elektrisches Verteilersystem bereitzustellen, welches auf möglichst effiziente Art und Weise einen ordnungsgemäßen Betrieb elektrischer Standardkomponenten auch bei tiefen Umgebungstemperaturen ermöglicht. Um dies zu ermöglichen, wird üblicherweise auf eine Beheizung der Verteilung zurückgegriffen. Bisherige Ausführungen sind beispielsweise über ein zentrales Heizelement im unteren Bereich der Verteilung realisiert. Eine andere Möglichkeit besteht darin, Heizschleifen von Heizbändern zu verlegen. Die erste Möglichkeit ist thermisch ineffizient, die letztere teilweise thermisch, vor allem aber kostentechnisch wenig effizient. Insbesondere ist letztere Lösung nicht montagefreundlich.

Das Dokument "Ready for winter? Rittal can help | Rittal Ltd", 25. Oktober 2023, XP055784121" beschreibt ein Gehäuse mit Befestigungsschienen, die zeilenförmig angeordnete Befestigungsstellen zur Befestigung von elektrischen Komponenten bereitstellen. Ein vertikal ausgerichtetes Heizelement ist unterhalb von elektrischen Komponenten und seitlich versetzt zu diesen angeordnet. Ein Lüfter ist vorgesehen, um für den Zustrom von erhitzter Luft zu den elektrischen Komponenten zu sorgen.

Die DE 92 17 778 U1 beschreibt eine Schaltschrankheizung mit einem Heizkörper, der über Isolationseinrichtungen mit einem Thermostatgehäuse verbunden und horizontal neben diesem angeordnet ist. Die Isolationseinrichtungen dienen dazu, den Wärmeübertrag zum Thermostatgehäuse zu minimieren. Vertikal oberhalb des Thermostatgehäuses sind Kabelkanäle vorgesehen.

Weitere Vorrichtungen zum Beheizen von Schaltschränken oder elektronischen Baugruppen sind aus der DE 10 2014 104 857 A1, aus der EP 1 047 168 A1 und aus der CN 1 777 341 A bekannt.

Es ist Aufgabe der Erfindung, ein elektrisches Verteilersystem mit einer leicht skalierbaren, thermisch effizienten und günstigen Heizungslösung bereitzustellen.

Diese Aufgabe wird durch den Gegenstand von Anspruch 1 gelöst. Die abhängigen Ansprüche geben vorteilhafte Ausführungsformen der Erfindung an.

Ein erfindungsgemäßes elektrisches Verteilersystem umfasst ein Gehäuse und elektrischen Komponenten aus einer Gruppe umfassen Relais, Schalter, Zeitschaltuhren, und Sicherungen. Weiterhin umfasst das Elektrisches Verteilersystem in dem Gehäuse vorgesehene horizontal angeordnete Befestigungsschienen, die zeilenförmig angeordnete Befestigungsstellen zur Befestigung der elektrischen Komponenten bereitstellen. In dem Gehäuse ist ferner mindestens ein zeilenförmiges Heizelement vorgesehen, welches sich im Wesentlichen horizontal erstreckt und jeweils einen Radiatorkörper umfasst, wobei das Heizelement direkt unter einer zugeordneten Gruppe von Befestigungsstellen angeordnet ist, wo es zum Beheizen von an den zugeordneten Befestigungsstellen befestigten elektrischen Komponenten mit elektrischem Strom beaufschlagbar ist, und wobei an einer Befestigungsstelle, an der im Betrieb des elektrischen Verteilersystems mitunter die geringste Temperatur erwartet wird, anstelle einer entsprechenden elektrischen Komponente eine Temperaturmesseinrichtung vorgesehen ist.

Vorteilhafterweise lassen sich die elektrischen Komponenten seitlich auf die Befestigungsschienen aufschieben oder von vorne aufstecken. Es wäre auch denkbar, dass die elektrischen Komponenten an den Befestigungsstellen angeschraubt oder angeklebt oder anderweitig befestigt werden. Die Befestigungsschienen können zellenförmig angeordnete diskrete Befestigungsstellen aufweisen, an denen elektrische Komponenten befestigt werden können. Die Befestigungsschienen müssen aber nicht notwendigerweise diskrete Befestigungsstellen aufweisen. Beispielsweise wäre es denkbar, dass elektrische Komponenten durch seitliches Aufschieben oder von vorne Aufstecken an jeder beliebigen Position entlang einer Befestigungsschiene befestigbar sind, so dass die Befestigungsschiene entlang ihrer Erstreckungsrichtung kontinuierlich angeordnete nicht-diskrete Befestigungsstellen aufweist.

In dem Gehäuse sind ein oder mehrere zellenförmige Heizelemente vorgesehen, welche jeweils einen Radiatorkörper umfassen. Die zellenförmigen Heizelemente sind jeweils unter einer zugeordneten Gruppe von Befestigungsstellen angeordnet, wo sie zum Beheizen von an den zugeordneten Befestigungsstellen befestigten elektrischen Komponenten mit elektrischem Strom beaufschlagbar sind.

Die elektrischen Heizelemente erlauben ein Beheizen der elektrischen Komponenten, so dass diese auch unterhalb ihrer spezifizierten Umgebungstemperatur (z.B. bei weniger als -25 °C) einsetzbar sind. Aufgrund der Radiatorkörper können die Heizelemente besonders gut Wärme an die Umgebung abgeben. Durch ihre Zeilenform können die Heizelemente platzsparend direkt unter den zellenförmig angeordneten Befestigungsstellen für die zu beheizenden elektrischen Komponenten angebracht werden. Aufgrund der so erreichbaren Nähe zwischen den zu beheizenden elektrischen Komponenten und den Heizelementen lassen sich die elektrischen Komponenten besonders energieeffizient beheizen.

Bevorzugt sind die Heizelemente explosionsgeschützt, um auch in explosionsgefährdeten Umgebungen einsetzbar zu sein, wie beispielsweise bei Vorliegen von brennbaren Gasen, Nebeln und/oder Dämpfen. Die Heizelemente können insbesondere druckfest gekapselt sein und die Erfordernisse für eine Ex-d Kennzeichnung erfüllen.

Es wäre denkbar, dass lediglich ein einziges zellenförmiges Heizelement vorgesehen ist. Dieses könnte insbesondere unter einer Gruppe von Befestigungsstellen angeordnet sein, welche zum Befestigen von besonders heizbedürftigen elektrischen Komponenten vorgesehen sind. Insbesondere wenn eine größere Anzahl von elektrischen Komponenten beheizt werden soll, kann es jedoch vorteilhaft sein, wenn mehrere Einheiten vorgesehen sind, die jeweils ein Heizelement und eine diesem zugeordnete Gruppe von Befestigungsstellen umfassen. Es könnten z. B. mehrere solche Einheiten untereinander in dem Gehäuse angeordnet sein. Alternativ oder zusätzlich könnten mehrere Einheiten horizontal nebeneinander in dem Gehäuse angeordnet sein. Beispielsweise gegenüber einem einzelnen insbesondere zentral in dem Gehäuse vorgesehenen größeren Heizelement haben mehrere zeilenförmige, direkt unter den zu beheizenden elektrischen Elementen angeordnete Heizelemente aufgrund ihrer Nähe zu den entsprechenden elektrischen Komponenten eine höhere Energieeffizienz. Zudem lassen sich die zeilenförmigen Heizelemente deutlich platzsparender in dem Gehäuse anordnen. Das Vorsehen mehrerer zeilenförmiger Heizelemente erlaubt auch ein situationsabhängiges Beheizen lediglich eines Teils der Heizelemente entsprechend dem momentanen Bedarf, was die Energieeffizienz des Verteilersystems weiter erhöhen kann.

Zur insbesondere lokalen Erhöhung der erreichbaren Heizleistung kann über zumindest einem Heizelement und unter der diesem zugeordneten Gruppe von Befestigungsstellen ein weiteres mit elektrischem Strom beaufschlagbares zeilenförmiges Heizelement angeordnet sein. Dies kann für jede Gruppe von Befestigungsstellen oder nur einen Teil der Gruppen von Befestigungsstellen, welcher eine besonders gute Beheizung erfordert, der Fall sein.

Die Befestigungsschienen sind horizontal angeordnet, so dass die Befestigungsstellen entlang horizontaler Zeilen vorgesehen sind. Die Heizelemente sind derart angeordnet, dass sie sich zumindest im Wesentlichen horizontal erstrecken. Eine besonders hohe Heizleistung an den einzelnen elektrischen Komponenten kann erreicht werden, wenn die Befestigungsschienen und die Heizelemente bezüglich einer vertikalen Richtung in dem Gehäuse alternierend angeordnet sind. So ist jeweils einer Befestigungsschiene ein darunterliegendes Heizelement zugeordnet. Abhängig von den vorgesehenen elektrischen Komponenten und von der Temperatur der Umgebung, in der das Verteilersystem eingesetzt werden soll, kann aber auch ein anderes Verhältnis zwischen Befestigungsschienen und Heizelementen sinnvoll sein. Beispielsweise könnten bezüglich einer vertikalen Richtung in dem Gehäuse immer mehrere, beispielsweise zwei, drei oder mehr, Befestigungsschienen abwechselnd mit einem Heizelement vorgesehen sein. So wäre jeweils mehreren Befestigungsschienen ein gemeinsames darunterliegendes Heizelement zugeordnet. Um eine höhere Heizleistung zu erreichen, können aber auch immer jeweils zwei oder mehrere Heizelemente bezüglich der vertikalen Richtung in dem Gehäuse abwechselnd mit einer oder mehreren, beispielsweise zwei, drei oder mehr, Befestigungsschienen vorgesehen sein.

Abhängig von der Dimensionierung der Befestigungsschienen kann es sinnvoll sein, mehrere Heizelemente entlang ihrer Zeilenerstreckungsrichtung aneinandergereiht anzuordnen. Dies kann gegenüber einem einzelnen längeren Heizelement vorteilhaft sein, da eine höhere Flexibilität bei der Anordnung der Heizelemente besteht und ggf. in einem bestimmten Betriebsmodus lediglich ein Teil der Heizelemente mit elektrischem Strom beaufschlagt werden kann, um gezielt bestimmte elektrische Komponenten zu beheizen.

Die Heizelemente können auf einer Innenwand, insbesondere einer Rückwand, des Gehäuses vorgesehen sein. Insbesondere können die Heizelemente auf Vorsprüngen der Innenwand oder der Rückwand vorgesehen sein. Auch die Befestigungsschienen können an der Innenwand, insbesondere der Rückwand, des Gehäuses vorgesehen sein.

Die Heizelemente können beispielsweise elektrisch in Reihe und/oder parallel geschaltet sein.

Das Verteilersystem kann ein Sammelschienensystem mit Sammelschienen zum Versorgen der elektrischen Komponenten mit elektrischem Strom umfassen. Durch Verbinden von Anschlussstellen der elektrischen Komponenten mit den Sammelschienen können verschiedene Stromkreise schnell und wirtschaftlich angeschlossen werden.

Das Sammelschienensystem kann innerhalb des Gehäuses vorgesehen sein. Vorzugsweise ist das Sammelschienensystem in dem Gehäuse unterhalb der Befestigungsschienen und/oder der Heizelemente vorgesehen. Da sich von den Heizelementen generierte Wärme bevorzugt nach oben hin ausbreitet, kann so vermieden werden, dass der das Sammelschienensystem umfassende Bereich des Gehäuses unnötigerweise beheizt wird. Zudem kann von dem Sammelschienensystem generierte Wärme besser zum Erwärmen der angeordneten elektrischen Komponenten beitragen, wenn diese über dem Sammelschienensystem angeordnet sind.

Ein das Sammelschienensystem umfassender Bereich des Gehäuses kann gegenüber einem die Befestigungsschienen und/oder die Heizelemente umfassenden Bereich des Gehäuses thermisch entkoppelt sein. Dies kann beispielsweise durch entsprechende Trennwände und/oder ein Bürstenschott, welches noch eine Kabeldurchführung ermöglicht, erreicht werden. Besonders wirksam ist eine solche Maßnahme, wenn das Sammelschienensystem in dem Gehäuse oberhalb der Heizelemente und/oder der Befestigungsschienen vorgesehen ist, da durch die thermische Entkopplung ein unnötiges Beheizen des das Sammelschienensystem umfassenden Bereichs vermieden bzw. verringert wird. Aber auch wenn das Sammelschienensystem unter den Heizelementen und/oder den Befestigungsschienen liegt, kann es sinnvoll sein, den das Sammelschienensystem umfassenden Bereich des Gehäuses gegenüber dem die Befestigungsschienen und/oder die Heizelemente umfassenden Bereich des Gehäuses thermisch zu entkoppeln.

Das Verteilersystem kann Anschlussklemmen zum Anschließen des Verteilersystems an eine externe Stromversorgung für die elektrischen Komponenten umfassen. Die Anschlussklemmen können beispielsweise in dem Gehäuse oberhalb der Befestigungsschienen und/oder oberhalb des Sammelschienensystems vorgesehen sein. Es ist auch denkbar, dass die Anschlussklemmen zwischen einer Rückwand des Gehäuses und den Sammelschienen vorgesehen sind und/oder in einer bereichsweise zwischen einer Rückwand des Gehäuses und den Sammelschienen verlaufenden, zu der Rückwand des Gehäuses parallelen Ebene angeordnet sind. Die Sammelschienen können mittels Abstandshaltern von der Rückwand des Gehäuses beabstandet sein, um Platz für das Vorsehen der Anschlussklemmen zu schaffen. Zwischen dem Sammelschienensystem und den Anschlussklemmen kann ein elektrisch isolierendes Schutzelement vorgesehen sein, um einen Kurzschluss zu vermeiden.

Es kann ein Hauptschalter vorgesehen sein, mit welchem sich die Stromzufuhr zum Versorgen der elektrischen Komponenten zentral ab- und anschalten lässt. Der Hauptschalter kann in einem bevorzugt neben dem Sammelschienensystem vorgesehenen Hauptschaltergehäuse vorgesehen sein.

In dem Gehäuse ist eine Temperaturmesseinrichtung vorgesehen. Um besonders gut einschätzen zu können, ob die Beheizung der elektrischen Komponenten durch die Heizelemente ausreichend ist, ist die Temperaturmesseinrichtung anstelle einer entsprechenden elektrischen Komponente an einer Befestigungsstelle einer Befestigungsschiene angebracht.

Die Temperaturmesseinrichtung ist an der Befestigungsstelle, an der im Betrieb des elektrischen Verteilersystems mitunter die geringste Temperatur erwartet wird, angebracht. So kann möglichst frühzeitig erkannt werden, wann ein Aktivieren der Heizelemente oder ein Erhöhen der Heizleistung notwendig wird.

Es kann eine Schalteinrichtung vorgesehen sein, die dazu ausgelegt ist, eine Stromversorgung der elektrischen Komponenten und/oder des Sammelschienensystems automatisch zu unterbrechen, wenn eine in dem die Befestigungsstellen umfassenden Innenraum des Gehäuses vorliegende Temperatur geringer als eine vorbestimmte Betriebstemperatur ist. Alternativ oder zusätzlich kann die Schalteinrichtung dazu ausgelegt sein, ein Aktivieren der Stromversorgung der elektrischen Komponenten und/oder des Sammelschienensystems vor einem Erreichen der vorbestimmten Betriebstemperatur zu verhindern. Die Schalteinrichtung kann insbesondere abhängig von einem von der Temperaturmesseinrichtung bereitgestellten Messwert reagieren. Durch ein Abschalten einer Stromversorgung und/oder ein Verhindern eines Aktivierens der Stromversorgung bei zu geringen Temperaturen kann verhindert werden, dass elektrische Komponenten bei zu niedrigen Temperaturen betrieben werden, was zu gefährlichen Betriebszuständen oder einer Beschädigung der elektrischen Komponenten oder an das elektrische Verteilersystem angeschlossener externer Geräte führen könnte.

Vorteilhafterweise sind die Heizelemente zum Beheizen der elektrischen Komponenten mit elektrischem Strom beaufschlagbar, während die elektrischen Komponenten und/oder die Sammelschienen nicht mit elektrischem Strom versorgt sind. Dies kann beispielsweise dadurch erreicht werden, dass für die Heizelemente eine gegenüber der Stromversorgung für die elektrischen Komponenten separate Stromversorgung vorgesehen ist. Hierdurch lassen sich die elektrischen Komponenten vorheizen, bevor die Hauptversorgung des elektrischen Verteilersystems aktiviert wird. Es ist auch denkbar, dass die Heizelemente über eine Notversorgung elektrisch versorgt werden können, so dass im Fall einer Unterbrechung der Hauptstromversorgung das elektrische Verteilersystem möglichst schnell wieder einsatzbereit ist.

Vorteilhafterweise kann zwischen einem ersten Betriebsmodus, in dem die Heizelemente für die Beaufschlagung mit elektrischem Strom in Reihe geschaltet sind, und einem zweiten Betriebsmodus umgeschaltet werden, in dem die Heizelemente für die Beaufschlagung mit elektrischem Strom parallel zueinander geschaltet sind. Hierdurch kann auf einfache Art und Weise die von den Heizelementen generierte Heizleistung situationsangepasst verändert werden.

Vorteilhafterweise umfasst zumindest ein Teil der Heizelemente ein Trennelement zur physischen Trennung eines oder mehrerer Kabel, insbesondere Kabel zum Anschließen der elektrischen Komponenten, von dem Heizelement, um ein übermäßiges Erhitzen der Kabel zu vermeiden. Ein solches Trennelement erstreckt sich vorzugsweise entlang einer Zeilenerstreckungsrichtung des entsprechenden Heizelements. Bevorzugt ist das Trennelement eines Heizelements von dem Radiatorkörper thermisch entkoppelt. Beispielsweise kann das Trennelement von dem Radiatorkörper beabstandet sein.

Vorzugsweise sind zumindest ein Teil der Trennelemente als Kabelkanal zur Aufnahme eines oder mehrerer Kabel, insbesondere Kabel zum Anschließen der elektrischen Komponenten, ausgebildet. Wegen der Zeilenform der Heizelemente und der erreichbaren räumlichen Nähe zwischen den Heizelementen und den zugeordneten elektrischen Komponenten lassen sich Versorgungskabel für die elektrischen Komponenten in den Kabelkanälen besonders effizient und platzsparend verlegen. Zudem sind die Kabel in den Kabelkanälen geschützt und aufgeräumt.

Vorzugsweise sind die elektrischen Komponenten derart an den Befestigungsstellen befestigt, dass zwischen benachbarten Komponenten zumindest bereichsweise einen Abstand von wenigstens 0,3 cm, 0,5 cm, 0,7 cm, 1 cm, 1,5 cm oder 2 cm vorliegt. Einander zugewandte Seitenflächen zweier benachbarter elektrischer Komponenten können dabei an jedem Punkt den genannten Mindestabstand voneinander aufweisen. Es kann aber ausreichend sein, wenn zumindest Teilbereiche der einander zugewandten Flächen benachbarter elektrischer Komponenten den genannten Mindestabstand voneinander aufweisen. Hierzu können die einander zugewandten Seiten zweier benachbarter elektrischer Komponenten bereichsweise bezüglich der Richtung auf die benachbarte elektrische Komponente zu zurückgenommen sein. Aufgrund des Abstands zwischen den benachbarten Komponenten ist eine Luftzirkulation zwischen den Komponenten möglich, so dass von den Heizelementen erwärmte Luft die elektrischen Komponenten besonders gut umfließen und damit beheizen kann, womit die Heizeffizienz erhöht wird.

Wenn die elektrischen Komponenten an den Befestigungsstellen befestigt sind, können sie sich jeweils entlang einer Vorstehrichtung von der Befestigungsschiene in Richtung auf eine Vorderöffnung des Gehäuses hin erstrecken. Ein bezüglich der Vorstehrichtung vorderes Ende der Heizelemente kann bezüglich der Vorstehrichtung hinter den Anschlussstellen der elektrischen Komponenten liegen. Die Heizelemente stehen dann in Richtung auf die Vorderöffnung des Gehäuses hin nicht über die Position der Anschlussstellen der elektrischen Komponenten hinaus vor. Somit lassen sich die Anschlussstellen zum elektrischen Anschließen der elektrischen Komponenten auch dann einfach erreichen, wenn direkt unter den elektrischen Komponenten ein Heizelement vorgesehen ist.

Im Folgenden wird die Erfindung anhand von Ausführungsbeispielen unter Bezugnahme auf die nachfolgenden Zeichnungen weiter erläutert. Dabei zeigt:
- Figur 1: eine schematische Darstellung eines elektrischen Verteilersystems mit darin angebrachten elektrischen Komponenten gemäß einer Ausführungsform;
- Figur 2A: eine schematische Darstellung eines zeilenförmigen Heizelements eines elektrischen Verteilersystems gemäß einer Ausführungsform;
- Figur 2B: eine schematische Darstellung eines weiteren zeilenförmigen Heizelements eines elektrischen Verteilersystems gemäß einer Ausführungsform;
- Figur 3: eine schematische Darstellung eines elektrischen Verteilersystems mit darin angebrachten elektrischen Komponenten gemäß einer Ausführungsform; und
- Figur 4: eine schematische Schnittansicht durch ein elektrisches Verteilersystem gemäß einer Ausführungsform, insbesondere zur Illustration unterschiedlicher möglicher Anordnungspositionen von Anschlussklemmen.

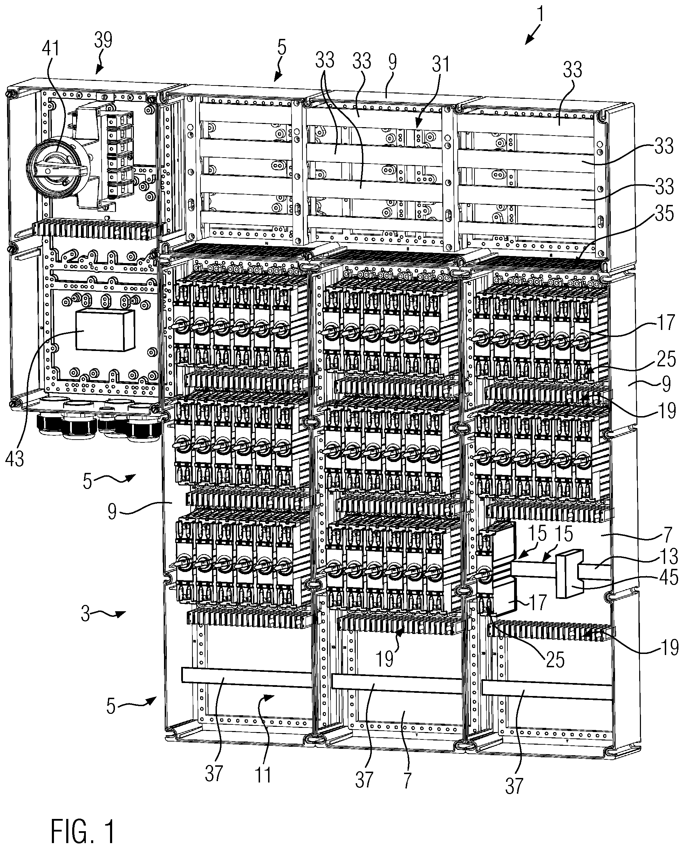

Fig. 1 zeigt in schematischer Ansicht ein elektrisches Verteilersystem 1 gemäß einer Ausführungsform. Das Verteilersystem 1 umfasst ein Gehäuse 3, welches im vorliegenden Beispiel in der Form eines Schaltschranks ausgebildet ist. In der gezeigten Ausführungsform ist das Gehäuse 3 modular aus einer Mehrzahl von Gehäusebausteinen 5 zusammengesetzt. Dies erlaubt ein individuelles Anpassen des Gehäuses 3 an den gewünschten Einsatzort. Alternativ könnte das Gehäuse 3 aber auch anderweitig ausgebildet sein, beispielsweise im Wesentlichen einstückig. Das Gehäuse 3 umfasst eine Rückwand 7 und Seitenwände 9. Von der Rückwand 7 und den Seitenwänden 9 wird eine Vorderöffnung 11 des Gehäuses 3 definiert, welche in Fig. 1 im Wesentlichen auf den Betrachter zu gerichtet ist. Über die Vorderöffnung 11 ist das Innere des Gehäuses 3 für Montage- und Wartungszwecke zugänglich. Die Vorderöffnung 11 kann im Normalbetrieb des elektrischen Verteilersystems 1 mittels in den Figuren der Übersichtlichkeit halber nicht dargestellten Türen oder anderweitig geschlossen sein.

In dem Gehäuse 3 sind Befestigungsschienen 13 vorgesehen, die zeilenförmig angeordnete Befestigungsstellen 15 zur Befestigung von elektrischen Komponenten 17 bereitstellen. In Fig. 1 sind Sicherungen als beispielhafte elektrische Komponenten 17 gezeigt. Es können aber auch andere elektrische Komponenten 17 an den Befestigungsstellen 15 angebracht werden, beispielsweise Relais, Schalter, Zeitschaltuhren und/oder andere Komponenten.

Um auch dann einen ordnungsgemäßen Betrieb der elektrischen Komponenten 17 zu gewährleisten, wenn das Verteilersystem 1 bei tiefen Umgebungstemperaturen (z.B. kleiner als - 25 °C) eingesetzt wird, für die die elektrischen Komponenten 17 nicht ausgelegt sind, sind in dem Gehäuse 3 Heizelemente 19 vorgesehen. Die Heizelemente 19 sind zeilenförmig und sind platzsparend direkt unter einer zugeordneten Gruppe von Befestigungsstellen 15 für elektrische Komponenten 17 angeordnet, wo sie zum Beheizen von an den zugeordneten Befestigungsstellen 15 befestigten elektrischen Komponenten 17 mit elektrischem Strom beaufschlagbar sind. Aufgrund ihrer Zeilenform lassen sich die Heizelemente 19 in unmittelbarer Nähe der zugeordneten Befestigungsstellen 15 anordnen und können an den Befestigungsstellen 15 angeordnete elektrische Komponenten 17 daher besonders effizient beheizen.

Bevorzugt sind die Heizelemente 19 explosionsgeschützt, um auch in explosionsgefährdeten Umgebungen einsetzbar zu sein, wie beispielsweise bei Vorliegen von brennbaren Gasen, Nebeln und/oder Dämpfen. Die Heizelemente 19 können beispielsweise druckfest gekapselt sein und die Erfordernisse für eine Ex-d Kennzeichnung erfüllen.

In Fig. 1 sind in dem Gehäuse 3 mehrere Einheiten vorgesehen, die jeweils ein Heizelement 19 und die diesem zugeordnete Gruppe von Befestigungsstellen 15 umfassen. Es könnte aber auch lediglich ein einziges Heizelement 19 vorgesehen sein, welches unter einer zugeordneten Gruppe von Befestigungsstellen 15 vorgesehen ist.

In der gezeigten Ausführungsform sind mehrere Einheiten aus einem Heizelement 19 und der zugeordneten Gruppe von Befestigungsstellen 15 untereinander in dem Gehäuse 3 angeordnet. Ebenso sind mehrere Einheiten aus einem Heizelement 19 und der zugeordneten Gruppe von Befestigungsstellen 15 horizontal nebeneinander in dem Gehäuse 3 angeordnet. So lassen sich die Heizelemente 19 und die elektrischen Komponenten 17 besonders effizient anordnen.

Wie in Fig. 1 gezeigt, können mehrere Heizelemente 19 entlang ihrer Zeilenerstreckungsrichtung aneinandergereiht angeordnet sein. Gegenüber einem einzelnen langen Heizelement 19 hat dies den Vorteil, dass die Heizelemente 19 unabhängig voneinander angesteuert werden können und so situationsgemäß ortsaufgelöst unterschiedliche Heizleistungen einstellbar sind.

Entlang einer vertikalen Richtung ist in Fig. 1 jeweils über einem sich horizontal zeilenförmig erstreckenden Heizelement 19 eine parallel zu dem Heizelement 19 verlaufende Befestigungsschiene 13 angeordnet, welche die dem Heizelement 19 zugeordneten Befestigungsstellen 15 bereitstellet. Hierdurch können die einzelnen elektrischen Komponenten 17 besonders gut effizient beheizt werden. Es wäre aber auch denkbar, dass über zumindest manchen Heizelementen 19 zwei oder mehrere Befestigungsschienen 13 angeordnet ist. In Fig. 1 sind bezüglich einer vertikalen Richtung Befestigungsschienen 13 und Heizelemente 19 alternierend angeordnet. Es wäre aber auch denkbar, jeweils mehr als zwei Befestigungsschienen 13 zwischen zwei aufeinanderfolgenden Heizelementen 19 anzuordnen. Sind über einem Heizelement 19 mehrere zugeordnete Befestigungsschienen 13 vorgesehen, ist es vorteilhaft, wenn die elektrischen Komponenten 17, für die der größte Heizbedarf erwartet wird, an der Befestigungsschiene 13 angebracht werden, die direkt über dem Heizelement 19 liegt.

Zur Erhöhung der erreichbaren Heizleistung könnte über bestimmten Heizelementen 19 und unter der jeweiligen zugeordneten Gruppe von Befestigungsstellen 15 jeweils ein weiteres mit elektrischem Strom beaufschlagbares zeilenförmiges Heizelement 19 angeordnet sein. Dies kann für jede Gruppe von Befestigungsstellen 15 oder nur einen Teil der Gruppen von Befestigungsstellen 15, welcher eine besonders gute Beheizung erfordert, der Fall sein. Eine solche Anordnung zweier Heizelemente 19 würde im Wesentlichen einem einzelnen breiteren Heizelement 19 entsprechen, hätte aber den Vorteil, dass bedarfsgemäß wahlweise entweder beide oder lediglich eines der beiden Heizelemente 19 betrieben werden kann. Außerdem wäre es ausreichend, lediglich eine Art von Heizelementen 19 vorzuhalten.

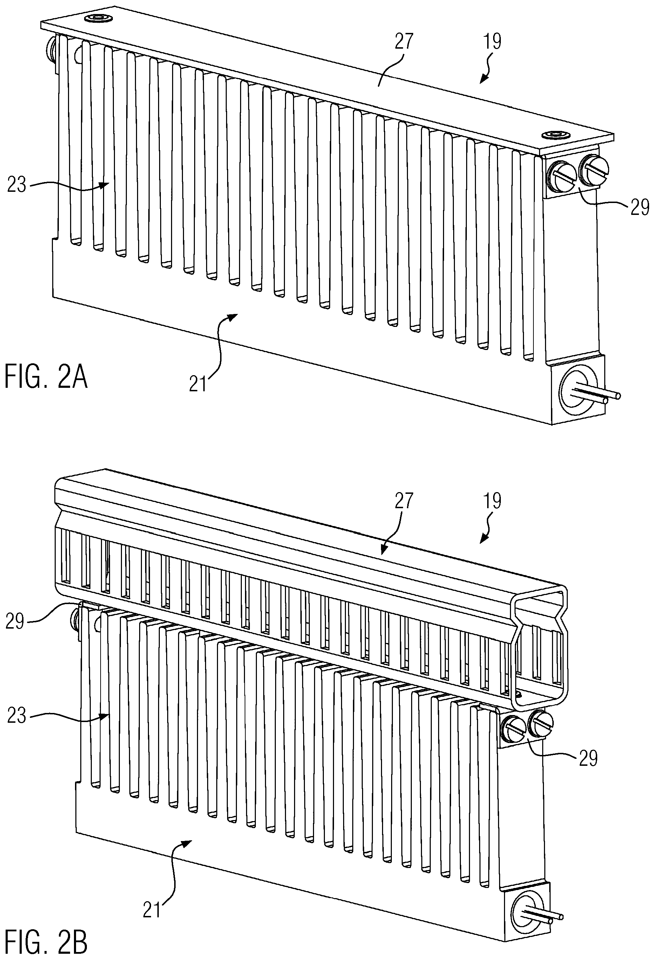

In Fig. 2A ist ein zeilenförmiges Heizelement 19 detaillierter dargestellt. Zum Generieren der Heizleistung kann das Heizelement 19 insbesondere innerhalb seines Grundkörpers 21 ein mit Strom beaufschlagbares Widerstandselement aufweisen. An dem Hauptkörper 21 ist ein Radiatorkörper 23 vorgesehen, um einen effizienten Wärmeaustausch mit der in dem Gehäuse 3 vorhandenen Atmosphäre zu gewährleisten. Die Heizelemente 19 können beispielsweise mit einer dem Radiatorkörper 23 gegenüberliegenden Oberfläche des Hauptkörpers 21 an der inneren Rückwand 7 des Gehäuses 3 angebracht werden. Zum Anbringen der Heizelemente 19 kann die innere Rückwand 7 des Gehäuses 3 Vorsprünge oder Vertiefungen aufweisen. Vorteilhafterweise sind die Heizelemente 19 derart an dem Gehäuse 3 angebracht, dass sie von der Rückwand 7 in Richtung auf die Vorderöffnung 11 des Gehäuses 3 hin nicht bis zu der Position der Anschlussstellen 25 der elektrischen Komponenten 17 zum Anschließen der elektrischen Komponenten 17 vorstehen. So lassen sich die elektrischen Komponenten 17 auch bei in dem Gehäuse 3 vorinstallierten Heizelementen 19 unproblematisch elektrisch anschließen.

Das in Fig. 2A gezeigte Heizelement 19 umfasst ein insbesondere optionales Trennelement 27 zur physischen Trennung eines oder mehrerer Kabel zum Anschließen der elektrischen Komponenten 17 von dem Heizelement 19, um ein übermäßiges Erhitzen der Kabel zu vermeiden. Das Trennelement 27 erstreckt sich hierzu entlang einer Zeilenerstreckungsrichtung des Heizelements 19. Bevorzugt ist das Trennelement 27 eines Heizelements 19 von dem Radiatorkörper 23 thermisch entkoppelt. Beispielsweise kann das Trennelement 27, wie in Fig. 2A dargestellt über einen insbesondere aus Kunststoff gefertigten Abstandshalter 29 von dem Radiatorkörper 23 beabstandet sein. In der dargestellten Variante ist das Trennelement 27 an dem Radiatorkörper 23 angebracht. Es wäre aber auch denkbar, dass das Trennelement 27 an separaten Aufnahmen im Gehäuse 3 befestigt ist, um die thermische Entkopplung zu verbessern.

Fig. 2B zeigt eine andere Ausführungsform eines zeilenförmigen Heizelements 19, bei dem das Trennelement 27 als Kabelkanal zur Aufnahme von Kabeln zum Anschließen der elektrischen Komponenten 17 ausgebildet ist. In dem Kabelkanal lassen sich die Kabel sicher und geschützt zu den elektrischen Komponenten 17 führen. Vorzugsweise erstreckt sich der Kabelkanal entlang der Zeilenerstreckungsrichtung des entsprechenden Heizelements 19. Da sich das Heizelement 19 zeilenförmig unter den die elektrischen Komponenten 17 tragenden Befestigungsschienen 13 erstreckt, können so auf einfache Art und Weise die elektrischen Komponenten 17 erreicht werden. Vorzugsweise ist der Kabelkanal von dem Radiatorkörper 23 beabstandet, beispielsweise über einen Abstandshalter 29. Der Abstandshalter 29 kann eine geringe Wärmeleitfähigkeit aufweisen, um ein übermäßiges Erhitzen des Kabelkanals durch direkten Kontakt mit dem Radiatorkörper 23 zu vermeiden. Es wäre aber auch denkbar, dass der Kabelkanal direkt in dem Radiatorkörper 23 vorgesehen ist oder an separaten Aufnahmen im Gehäuse 3 befestigt ist.

Das elektrische Verteilersystem 1 umfasst zudem ein Sammelschienensystem 31 mit Sammelschienen 33 zum Versorgen der elektrischen Komponenten 17 mit elektrischem Strom. Die elektrischen Komponenten 17 lassen sich über Kabel, welche vorzugsweise zumindest bereichsweise in einem Kabelkanal der Heizelemente 19 geführt sind, mit den Sammelschienen 33 verbinden. In der in Fig. 1 gezeigten Ausführungsform ist das Sammelschienensystem 31 in einem oberen Bereich des Gehäuses 3 vorgesehen, welcher über dem die Befestigungsschienen 13 und die Heizelemente 19 umfassenden Bereich liegt. Der das Sammelschienensystem 31 umfassende Bereich des Gehäuses 3 ist in der gezeigten Ausführungsform gegenüber dem die Befestigungsschienen 13 und die Heizelemente 19 umfassenden Bereich des Gehäuses 3 über ein Bürstenschott 35 thermisch entkoppelt. Durch das Bürstenschott 35 lassen sich die Kabel zum Verbinden der Sammelschienen 33 mit den elektrischen Komponenten 17 durchführen, aber der Wärmeaustausch zwischen den entkoppelten Bereichen wird reduziert. So wird die Heizleistung, die in ein unnötiges Aufheizen des das Sammelschienensystem 31 umfassenden Bereichs des Gehäuses 3 eingeht, verringert.

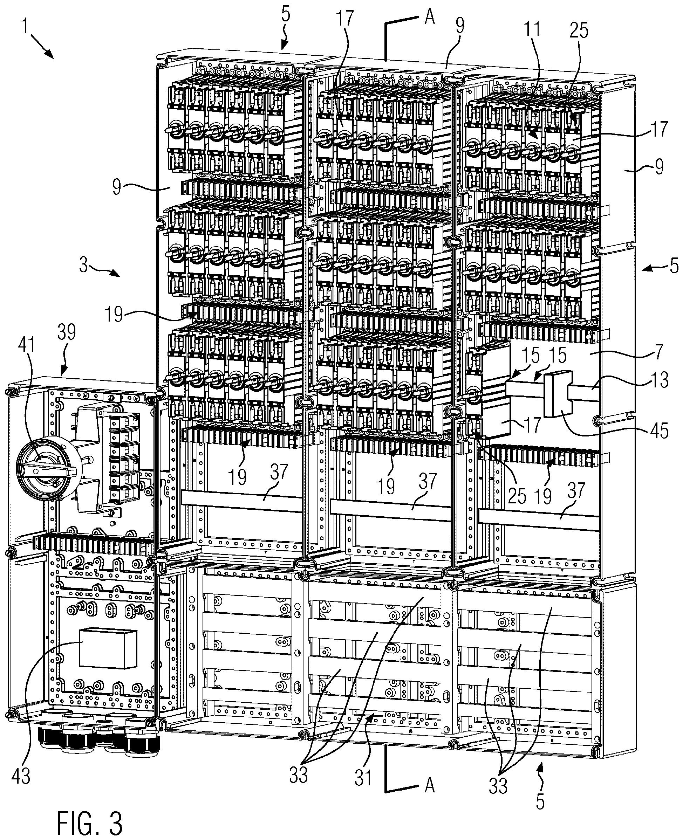

In einer in Fig. 3 gezeigten alternativen Ausführungsform eines elektrischen Verteilersystems 1 ist das Sammelschienensystem 31 in dem Gehäuse 3 unterhalb der Befestigungsschienen 13 und der Heizelemente 19 vorgesehen. Da die von den Heizelementen 19 erzeugte Wärme von sich aus bevorzugt nach oben hin diffundiert, wird das Sammelschienensystem 31 weniger unnötig beheizt, als wenn es oberhalb der Heizelemente 19 vorgesehen wäre. Auch hierdurch kann die Energieeffizienz der Beheizung verbessert werden. Auch wenn der das Sammelschienensystem 31 umfassende Bereich des Gehäuses 3 unterhalb des die Heizelemente 19 und die Befestigungsschienen 13 umfassenden Bereichs des Gehäuses 3 vorgesehen ist, können die beiden Bereiche mittels eines Bürstenschotts 35 oder anderweitig thermisch entkoppelt werden, um die Wärmezufuhr zu dem Sammelschienensystem 31 weiter zu verringern. Alternativ wäre es, wie in Figur 3 gezeigt, auch denkbar, keine thermische Entkopplung zwischen dem das Sammelschienensystem 31 umfassenden Bereich und dem die Befestigungsschienen 13 umfassenden Bereich des Gehäuses 3 vorzusehen, da so beim Betrieb des Sammelschienensystems 31 generierte Wärme zu den elektrischen Komponenten 17 aufsteigen und diese beheizen kann.

Zum Anschließen des elektrischen Verteilersystems 1 an eine externe Stromversorgung sind Anschlussklemmen 37 vorgesehen. Die Anschlussklemmen 37 können mit den Sammelschienen 33 des Sammelschienensystems 31 verbunden werden, um diese mit Strom zu versorgen. In der in Fig. 1 gezeigten Ausführungsform sind die Anschlussklemmen 37 in dem Gehäuse 3 unterhalb des Sammelschienensystems 31 sowie der elektrischen Komponenten 17 und der Heizelemente 19 vorgesehen. Wie in Fig. 3 gezeigt, wäre es aber auch denkbar, die Anschlussklemmen 37 in dem Gehäuse 3 zwischen dem Sammelschienensystem 31 und den Befestigungsschienen 13 vorzusehen.

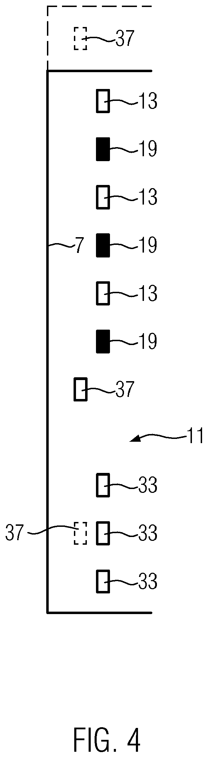

Es sind auch alternative Positionierungen der Anschlussklemmen 37 denkbar. Um diese zu illustrieren, ist in Fig. 4 eine schematische Schnittansicht durch das in Fig. 3 gezeigte elektrische Verteilersystem entlang der Linie A-A dargestellt. In durchgezogener Linie ist dabei die in Fig. 3 dargestellte Position der Anschlussklemmen 37 markiert. Es wäre aber auch denkbar, wie in Fig. 4 in gestrichelten Linien dargestellt, die Anschlussklemmen 37 in dem Gehäuse 3 oberhalb der Befestigungsschienen 13 und oberhalb des Sammelschienensystems 31 vorzusehen. Hierzu könnte beispielsweise das Gehäuse 3 nach oben hin um ein weiteres Modul erweitert werden. Denkbar wäre es auch, die Anschlussklemmen 37 zwischen der Rückwand 7 des Gehäuses 3 und den Sammelschienen 33 des Sammelschienensystems 31 anzuordnen. Auch dies ist in Fig. 4 gestrichelt dargestellt. Die Anschlussklemmen 37 können jeweils in einer bereichsweise zwischen der Rückwand 7 des Gehäuses 3 und den Sammelschienen 33 verlaufenden, zu der Rückwand 7 des Gehäuses 3 parallelen Ebene angeordnet sein.

Die in den Fig. 1 und 3 gezeigten elektrischen Verteilersysteme 1 umfassen ein neben dem Sammelschienensystem 31 vorgesehenes Hauptschaltergehäuse 39, in welchem ein Hauptschalter 41 zum Aktivieren oder Deaktivieren der Stromzufuhr für das elektrische Verteilersystem 1 vorgesehen ist.

Die Stromzufuhr für die Heizelemente 19 kann von einer Steuereinrichtung 43 gesteuert und/oder geregelt werden. Die Steuereinrichtung 43 kann in dem Gehäuse 3 oder extern angeordnet sein. Vorteilhafterweise werden der Steuereinrichtung 43 Temperaturmesswerte aus dem Inneren des Gehäuses 3 zugeführt, damit die Heizelemente 19 situationsgemäß mit elektrischem Strom beaufschlagt werden können. In den in den Fig. 1 und 3 gezeigten Ausführungsformen, gemäß der Erfindung, ist jeweils an einer Befestigungsstelle 15 anstatt einer elektrischen Komponente 17 eine Temperaturmesseinrichtung 45 vorgesehen. Diese ist an derjenigen Befestigungsstelle 15 vorgesehen, an der im Betrieb des elektrischen Verteilersystems 1 mitunter die geringste Temperatur erwartet wird. So kann das Vorliegen einer zu tiefen Betriebstemperatur bereits frühzeitig erkannt werden. Die Steuereinrichtung 43 kann über eine Schalteinrichtung dazu ausgelegt sein, die Stromversorgung der elektrischen Komponenten 17 automatisch zu unterbrechen, wenn eine in dem Innenraum des Gehäuses 3 vorliegende Temperatur geringer als eine vorbestimmte Betriebstemperatur ist. Hierzu kann beispielsweise die Stromversorgung des Sammelschienensystems 31 unterbrochen werden. Es wäre auch denkbar, lediglich die Stromversorgung einzelner elektrischer Komponenten 17, die besonders temperatursensitiv sind, zu unterbrechen. Die Steuereinrichtung 43 kann auch dazu ausgelegt sein, über eine Schalteinrichtung bereits das Aktivieren der Stromversorgung einer, mehrerer oder sämtlicher elektrischen Komponenten 17 zu verhindern, bevor die vorbestimmte Betriebstemperatur erreicht ist. Es kann ein Aktivieren der Stromversorgung des Sammelschienensystems 31 vor Erreichen der vorbestimmten Betriebstemperatur verhindert werden.

Es wäre denkbar, die Heizelemente 19 ebenso wie die elektrischen Komponenten 17 über die Sammelschienen 33 mit elektrischem Strom zu versorgen. Es kann aber auch vorteilhaft sein, wenn die Heizelemente 19 auch dann mit elektrischem Strom beaufschlagbar sind, wenn die elektrischen Komponenten 17 und/oder die Sammelschienen 33 nicht mit elektrischem Strom versorgt sind. Hierzu können die Heizelemente 19 beispielsweise über eine separate Stromversorgung verfügen. Um die Heizleistung situationsangemessen einstellen zu können, kann der den Heizelementen 19 zugeführte Strom durch die Steuereinrichtung 43 einstellbar sein. Besonders einfach lässt sich dies dadurch erreichen, dass die Steuereinrichtung 43 zwischen einem ersten Betriebsmodus, in dem die Heizelemente 19 für die Beaufschlagung mit elektrischem Strom in Reihe geschaltet sind, und einem zweiten Betriebsmodus, in dem die Heizelemente 19 für die Beaufschlagung mit elektrischem Strom parallel zueinander geschaltet sind, umschalten kann.

## Patentansprüche

1. Elektrisches Verteilersystem (1), umfassend:
ein Gehäuse (3);
in dem Gehäuse (3) vorgesehene horizontal angeordnete Befestigungsschienen (13), die zeilenförmig angeordnete Befestigungsstellen (15) zur Befestigung von elektrischen Komponenten (17) bereitstellen;
mindestens ein in dem Gehäuse (3) vorgesehenes, zeilenförmiges Heizelement (19), welches einen Radiatorkörper (23) umfasst, wobei das Heizelement (19) direkt unter einer zugeordneten Gruppe von Befestigungsstellen (15) angeordnet ist, wo es zum Beheizen von an den zugeordneten Befestigungsstellen (15) befestigten elektrischen Komponenten (17) mit elektrischem Strom beaufschlagbar ist,
und eine Temperaturmesseinrichtung (45),
**dadurch gekennzeichnet, dass** das zeilenförmige Heizelement (19) sich im Wesentlichen horizontal erstreckt und die Temperaturmesseinrichtung (45) an einer Befestigungsstelle (15), an der im Betrieb des elektrischen Verteilersystems (1) mitunter die geringste Temperatur erwartet wird, anstelle einer entsprechenden elektrischen Komponente (17) vorgesehen ist.

2. Verteilersystem nach Anspruch 1, wobei mehrere Einheiten, die jeweils ein Heizelement (19) und die diesem zugeordnete Gruppe von Befestigungsstellen (15) umfassen, untereinander in dem Gehäuse (3) angeordnet sind und/oder mehrere Einheiten horizontal nebeneinander in dem Gehäuse (3) angeordnet sind.

3. Verteilersystem nach einem der vorangehenden Ansprüche, wobei über zumindest einem Heizelement (19) und unter der diesem zugeordneten Gruppe von Befestigungsstellen (15) ein weiteres mit elektrischem Strom beaufschlagbares zeilenförmiges Heizelement (19) angeordnet ist.

4. Verteilersystem nach einem der vorangehenden Ansprüche, wobei bezüglich einer vertikalen Richtung alternierend mehrfach hintereinander ein oder mehrere Heizelemente (19) und eine, zwei, drei oder mehrere Befestigungsschienen (15) übereinander angeordnet sind.

5. Verteilersystem nach einem der vorangehenden Ansprüche, wobei zumindest zwei Heizelemente (19) entlang ihrer Erstreckungsrichtung aneinandergereiht angeordnet sind.

6. Verteilersystem nach einem der vorangehenden Ansprüche, wobei die Heizelemente (19) auf Vorsprüngen einer Innenwand, insbesondere einer Rückwand (7), des Gehäuses (3) vorgesehen sind.

7. Verteilersystem nach einem der vorangehenden Ansprüche, welches zudem ein Sammelschienensystem (31) mit Sammelschienen (33) zum Versorgen der elektrischen Komponenten (17) mit elektrischem Strom umfasst.

8. Verteilersystem nach Anspruch 7, wobei ein das Sammelschienensystem (31) umfassender Bereich des Gehäuses (3) gegenüber einem die Befestigungsschienen (13) umfassenden Bereich des Gehäuses (3) thermisch entkoppelt ist, bevorzugt über ein Bürstenschott (35).

9. Verteilersystem nach einem der Ansprüche 7 oder 8, wobei das Sammelschienensystem (31) in dem Gehäuse (3) unterhalb der Befestigungsschienen (13) vorgesehen ist.

10. Verteilersystem nach einem der Ansprüche 7 bis 9, welches zudem Anschlussklemmen (37) zum Anschließen des Verteilersystems (1) an eine externe Stromversorgung für die elektrischen Komponenten (17) umfasst, wobei die Anschlussklemmen (37) a) in dem Gehäuse (3) oberhalb der Befestigungsschienen (13) und oberhalb des Sammelschienensystems (31 ) vorgesehen sind, oder b) jeweils in einer bereichsweise zwischen einer Rückwand (7) des Gehäuses (3) und den Sammelschienen (13) verlaufenden, zu der Rückwand (7) des Gehäuses (3) parallelen Ebene angeordnet sind, oder c) zwischen der Rückwand (7) des Gehäuses (3) und den Sammelschienen (13) angeordnet sind.

11. Verteilersystem nach einem der vorangehenden Ansprüche, wobei eine Schalteinrichtung vorgesehen ist, welche dazu ausgelegt ist, eine Stromversorgung der elektrischen Komponenten (17) und/oder des Sammelschienensystems (31) automatisch zu unterbrechen, wenn eine in dem die Befestigungsstellen (15) umfassenden Innenraum des Gehäuses (3) vorliegende Temperatur geringer als eine vorbestimmte Betriebstemperatur ist, und/oder dazu ausgelegt ist, ein Aktivieren der Stromversorgung der elektrischen Komponenten (17) und/oder des Sammelschienensystems (31 ) vor Erreichen der vorbestimmten Betriebstemperatur zu verhindern.

12. Verteilersystem nach einem der vorangehenden Ansprüche, wobei zwischen einem ersten Betriebsmodus, in dem die Heizelemente (19) für die Beaufschlagung mit elektrischem Strom in Reihe geschaltet sind, und einem zweiten Betriebsmodus umgeschaltet werden kann, in dem die Heizelemente (19) für die Beaufschlagung mit elektrischem Strom parallel zueinander geschaltet sind.

13. Verteilersystem nach einem der vorangehenden Ansprüche, wobei zumindest ein Teil der Heizelemente (19) ein Trennelement (27) zur physischen Trennung eines Kabels von dem Heizelement (19) aufweist, welches sich vorzugsweise entlang einer Erstreckungsrichtung des Heizelements (19) erstreckt und vorzugsweise von dem Radiatorkörper (23) thermisch entkoppelt, insbesondere beabstandet, ist.

14. Verteilersystem nach einem der vorangehenden Ansprüche, welches zudem die elektrischen Komponenten (17) umfasst, welche sich jeweils entlang einer Vorstehrichtung von einer Befestigungsschiene (13) in Richtung auf eine Vorderöffnung (11) des Gehäuses (3) hin erstrecken, wobei ein bezüglich der Vorstehrichtung vorderes Ende der Heizelemente (19) bezüglich der Vorstehrichtung hinter Anschlussstellen (25) der elektrischen Komponenten (17) zum elektrischen Anschließen der elektrischen Komponenten (17) liegen.

## Claims

1. Electrical distribution system (1) comprising:
a housing (3);
attachment rails (13) which are provided in the housing (3), are arranged horizontally and provide the linearly arranged attachment points (15) for attaching electrical components (17);
at least one linear heating element (19) which is provided in the housing (3) and comprises a radiator body (23), the heating element (19) being arranged directly below an associated group of attachment points (15), where electric current can be applied to the heating element in order to heat electrical components (17) attached at the associated attachment points (15);
and a temperature measuring device (45),
**characterized in that** the linear heating element (19) extends substantially horizontally and the temperature measuring device (45) is provided at an attachment point (15) at which the lowest temperature is sometimes expected during operation of the electrical distribution system (1), in place of a corresponding electrical component (17).

2. Distribution system according to claim 1, wherein a plurality of units, each comprising a heating element (19) and the group of attachment points (15) associated therewith, are arranged one below the other in the housing (3) and/or a plurality of units are arranged horizontally next to one another in the housing (3).

3. Distribution system according to either of the preceding claims, wherein a further linear heating element (19) to which electric current can be applied is arranged above at least one heating element (19) and below the group of attached points (15) associated therewith.

4. Distribution system according to any of the preceding claims, wherein one or more heating elements (19) and one, two, three or more attachment rails (15) are arranged one above the other alternately in succession in relation to a vertical direction.

5. Distribution system according to any of the preceding claims, wherein at least two heating elements (19) are arranged one after the other along their extension direction.

6. Distribution system according to any of the preceding claims, wherein the heating elements (19) are provided on projections of an inner wall, in particular a rear wall (7), of the housing (3).

7. Distribution system according to any of the preceding claims, which further comprises a busbar system (31) having busbars (33) for supplying the electrical components (17) with electric current.

8. Distribution system according to claim 7, wherein a region of the housing (3) comprising the busbar system (31) is thermally decoupled from a region of the housing (3) comprising the attachment rails (13), preferably by means of a brush grommet (35).

9. Distribution system according to either claim 7 or claim 8, wherein the busbar system (31) is provided in the housing (3) below the attachment rails (13).

10. Distribution system according to any of claims 7 to 9, which further comprises terminals (37) for connecting the distribution system (1) to an external power supply for the electrical components (17), wherein the terminals (37) a) are provided in the housing (3) above the attachment rails (13) and above the busbar system (31), or b) are each arranged in a plane which extends in regions between a rear wall (7) of the housing (3) and the busbars (13) and is parallel to the rear wall (7) of the housing (3), or c) are arranged between the rear wall (7) of the housing (3) and the busbars (13).

11. Distribution system according to any of the preceding claims, wherein a switching device is provided, which is designed to automatically interrupt a power supply of the electrical components (17) and/or of the busbar system (31) when a temperature prevailing in the interior space of the housing (3) comprising the attachment points (15) is less than a predetermined operating temperature, and/or is designed to prevent the power supply of the electrical components (17) and/or of the busbar system (31) from being activated before the predetermined operating temperature is reached.

12. Distribution system according to any of the preceding claims, wherein it is possible to switch between a first operating mode, in which the heating elements (19) are connected in series for the application of electric current, and a second operating mode, in which the heating elements (19) are connected in parallel to one another for the application of electric current.

13. Distribution system according to any of the preceding claims, wherein at least a portion of the heating elements (19) comprises a separating element (27) for physically separating a cable from the heating element (19), which cable preferably extends along an extension direction of the heating element (19) and is preferably thermally decoupled, in particular spaced apart, from the radiator body (23).

14. Distribution system according to any of the preceding claims, which further comprises the electrical components (17), each of which extends along a projection direction of an attachment rail (13) toward a front opening (11) of the housing (3), wherein a front end of the heating elements (19) with respect to the projection direction is behind connection points (25) of the electrical components (17) for electrically connecting the electrical components (17) with respect to the projection direction.

## Revendications

1. Système de distribution (1) électrique, comprenant :
un boîtier (3) ;
des rails de fixation (13) prévus et disposés horizontalement dans le boîtier (3), lesquels fournissent des points de fixation (15) disposés en forme de ligne et permettant de fixer des composants électriques (17) ;
au moins un élément de chauffage (19) en forme de ligne prévu dans le boîtier (3), lequel élément de chauffage comprend un corps de radiateur (23), dans lequel l'élément de chauffage (19) est disposé directement en dessous d'un groupe associé de points de fixation (15) où il peut être alimenté en courant électrique pour le chauffage de composants électriques (17) fixés sur les points de fixation (15) associés,
et un dispositif de mesure de température (45),
**caractérisé en ce que** l'élément de chauffage (19) en forme de ligne s'étend sensiblement horizontalement et le dispositif de mesure de température (45) est prévu sur un point de fixation (15) à la place d'un composant électrique (17) correspondant, sur lequel point de fixation, lors du fonctionnement du système de distribution (1) électrique, la température la plus basse est parfois attendue.

2. Système de distribution selon la revendication 1, dans lequel plusieurs unités, lesquelles comprennent respectivement un élément de chauffage (19) et le groupe de points de fixation (15) associé à celui-ci, sont disposées les unes en dessous des autres dans le boîtier (3), et/ou plusieurs unités sont disposées horizontalement côte à côte dans le boîtier (3).

3. Système de distribution selon l'une des revendications précédentes, dans lequel un élément de chauffage (19) en forme de ligne supplémentaire pouvant être alimenté en courant électrique est disposé au-dessus d'au moins un élément de chauffage (19) et en dessous du groupe de points de fixation (15) associé à celui-ci.

4. Système de distribution selon l'une des revendications précédentes, dans lequel, par rapport à une direction verticale, un ou plusieurs éléments de chauffage (19) et un, deux, trois rails de fixation (15) ou plus sont disposés les uns au-dessus des autres en alternance plusieurs fois les uns derrière les autres.

5. Système de distribution selon l'une des revendications précédentes, dans lequel au moins deux éléments de chauffage (19) sont disposés l'un à la suite de l'autre le long de leur direction d'extension.

6. Système de distribution selon l'une des revendications précédentes, dans lequel les éléments de chauffage (19) sont prévus sur des saillies d'une paroi intérieure, en particulier d'une paroi arrière (7), du boîtier (3).

7. Système de distribution selon l'une des revendications précédentes, lequel comprend en outre un système de barres omnibus (31) comportant des barres omnibus (33) destinées à alimenter les composants électriques (17) en courant électrique.

8. Système de distribution selon la revendication 7, dans lequel une zone du boîtier (3) comprenant le système de barres omnibus (31) est désaccouplée thermiquement par rapport à une zone du boîtier (3) comprenant les rails de fixation (13), préférablement par l'intermédiaire d'un passe-câbles à brosse (35).

9. Système de distribution selon l'une des revendications 7 ou 8, dans lequel le système de barres omnibus (31) est prévu en dessous des rails de fixation (13) dans le boîtier (3).

10. Système de distribution selon l'une des revendications 7 à 9, lequel comprend en outre des bornes de connexion (37) permettant la connexion du système de distribution (1) à une alimentation en courant externe pour les composants électriques (17), dans lequel les bornes de connexion (37) a) sont prévues dans le boîtier (3) au-dessus des rails de fixation (13) et au-dessus du système de barres omnibus (31), ou b) sont respectivement disposées dans un plan parallèle à la paroi arrière (7) du boîtier (3) et s'étendant dans certaines régions entre une paroi arrière (7) du boîtier (3) et les barres omnibus (13), ou c) sont disposées entre la paroi arrière (7) du boîtier (3) et les barres omnibus (13).

11. Système de distribution selon l'une des revendications précédentes, dans lequel un dispositif de commutation est prévu, lequel est configuré pour interrompre automatiquement une alimentation en courant des composants électriques (17) et/ou du système de barres omnibus (31) lorsqu'une température présente dans l'espace intérieur du boîtier (3) comprenant les points de fixation (15) est inférieure à une température de fonctionnement prédéterminée, et/ou est configuré pour empêcher une activation de l'alimentation en courant des composants électriques (17) et/ou du système de barres omnibus (31) avant l'atteinte de la température de fonctionnement prédéterminée.

12. Système de distribution selon l'une des revendications précédentes, dans lequel il est possible de commuter entre un premier mode de fonctionnement, dans lequel les éléments de chauffage (19) sont montés en série pour l'alimentation en courant électrique, et un second mode de fonctionnement, dans lequel les éléments de chauffage (19) sont montés en parallèle pour l'alimentation en courant électrique.

13. Système de distribution selon l'une des revendications précédentes, dans lequel au moins une partie des éléments de chauffage (19) présente un élément de séparation (27) permettant la séparation physique d'un câble de l'élément de chauffage (19), lequel élément de séparation s'étend de préférence le long d'une direction d'extension de l'élément de chauffage (19) et est de préférence thermiquement désaccouplé, en particulier espacé, du corps de radiateur (23).

14. Système de distribution selon l'une des revendications précédentes, lequel comprend en outre les composants électriques (17) qui s'étendent respectivement le long d'une direction de saillie depuis un rail de fixation (13) en direction d'une ouverture avant (11) du boîtier (3), dans lequel une extrémité avant des éléments de chauffage (19) par rapport à la direction de saillie se trouvent, par rapport à la direction de saillie, derrière des points de connexion (25) des composants électriques (17), pour la connexion électrique des composants électriques (17).
